# EUROPÄISCHE PATENTANMELDUNG

(11) **EP 4 722 421 A1**
(43) Veröffentlichungstag der Anmeldung: **08.04.2026**
(21) Anmeldenummer: 24205024.3
(22) Anmeldetag: 07.10.2024
(51) Int. Cl.: C25D 7/06, C22C 38/00, C23C 2/06, C23C 2/28, C23C 14/14, C23C 28/02, C25D 3/56

(54) **GALVANNEALED-STAHLBLECH UND VERFAHREN ZUR HERSTELLUNG EINES SOLCHEN**

(71) Anmelder: voestalpine Stahl GmbH, 4020 Linz (AT)
(72) Erfinder: Knapp, Johannes, 4020 Linz (AT); Mörtlbauer, Thomas, 4020 Linz (AT)
(74) Vertreter: Lambsdorff & Lange Patentanwälte Partnerschaft mbB

(57) **Zusammenfassung**

In einem Verfahren zur Herstellung eines Galvannealed-Stahlblechs wird ein Stahlblech bereitgestellt, welches Si-legiert ist. Das Stahlblech wird einem Rekristallisationsglühen unterzogen. Durch Verzinken des geglühten Stahlblechs wird eine zinkbasierte Schicht über dem Stahlblech hergestellt. Der Galvannealed-Prozess umfasst ferner das Wärmebehandeln des verzinkten Stahlblechs. Dabei wird vor der Wärmebehandlung eine Reaktivsubstanz R über dem Stahlblech angeordnet, die mit Si, das während der Wärmebehandlung aus dem Stahlblech ausdiffundiert, eine intermetallische R-Si Phase in der zinkbasierten Schicht bildet. Die R-Si Phase verringert den Anteil von sich bei der Wärmebehandlung in der zinkbasierten Schicht bildenden Fe-Si und/oder Fe-Si-Al Phase.

## Beschreibung

Die Erfindung betrifft ein Verfahren zur Herstellung eines Galvannealed-Stahlblechs sowie ein Galvannealed-Stahlblech.

Galvannealed-Stahlbleche kommen in vielen technischen Bereichen zum Einsatz, beispielweise für Karosserie-Anwendungen in der Fahrzeugindustrie. Insbesondere werden Galvannealed-Stahlbleche für die Herstellung von energieabsorbierenden und/oder sicherheitsrelevanten Teilen, wie beispielsweise Strukturteilen, Längsträgern und Verstärkungen eingesetzt.

Aus Korrosionsschutzgründen werden diese Teile vielfach mit einer Zinkbeschichtung versehen. Bei Galvannealed-Stahlblechen wird die Verzinkung durch einen sogenannten Galvannealing-Prozess geschaffen. Dieser umfasst die Beschichtung des Stahlblechs mit einer metallischen Schicht auf Zinkbasis, die in einem Zinkbad aufgebracht wird (sogenanntes Feuerverzinken) oder mittels kathodischer Abscheidung (sogenanntes Elektrolytisches Verzinken (ELO)) aufgebracht wird, und eine nachfolgende Wärmebehandlung, mit welcher die zinkbasierte Schicht durch Diffusion von Eisen aus dem Stahlblech in Zn-Fe Phasen umgewandelt wird. Bei einer vollständigen Phasenumwandlung ("Durchlegierung") der zinkbasierten Schicht weist diese nach der Wärmebehandlung etwa 9 wt% Eisen auf.

Es ist bekannt, dass Silizium (Si), welches bei der Wärmebehandlung ebenfalls aus dem Stahlblech in die zinkbasierte Schicht bzw. an die Grenzfläche des Stahlblechs diffundiert, die Zn-Fe Phasenbildung behindert. Dies hat zur Folge, dass der Galvannealing-Prozess mit zunehmendem Si-Gehalt des Stahlblechs nur noch schwer oder gar nicht mehr durchführbar ist.

Die Verwendung von Stahlblechen mit niedrigem Si-Gehalt (z.B. weniger als 0,4 wt%) würde zwar eine Lösung der angesprochenen Problematik darstellen. Sie ist in der Praxis jedoch kein gangbarer Weg, da für die gewünschten Eigenschaften des Stahlblechs in vielen Fällen höhere Si-Gehalte als 0,4 wt% erforderlich sind.

Bisherige Ansätze zur Lösung des Problems bestehen darin, die Temperatur der Wärmebehandlung im Galvannealing-Prozess zu erhöhen und/oder die Bandgeschwindigkeit zu verringern, um die Dauer der Wärmebehandlung zu erhöhen. Dadurch wird der Effekt der Wärmebehandlung (Glühwirkung) erhöht.

Diese Maßnahmen sind jedoch mit Nachteilen verbunden. Eine Temperaturerhöhung bei der Wärmebehandlung führt zu unerwünschten Zn-Fe Phasen ("Phasenmix") in der Zn-Fe-Schicht. Außerdem können durch eine Temperaturerhöhung die mechanischen Eigenschaften des Stahlbandes negativ beeinflusst werden, beispielsweise indem ein Festigkeitsverlust auftritt, da Austenit zerfällt. Längere Glühdauern beim Galvannealing-Prozess sind unwirtschaftlich und in vielen Fällen prozessbedingt gar nicht möglich.

EP 2 171 117 P1 beschreibt einen Galvannealing-Prozess für TRIP (TRansformation-Induced Plasticity)-Stähle, bei welchem das Stahlblech in einem Ofen mit direkter Flamme oxidiert wird, so dass eine Schicht aus Eisenoxid auf der Oberfläche des Stahlblechs gebildet wird.

EP 2 798 094 B1 beschreibt einen Galvannealing-Prozess, bei welchem das Stahlblech mit einer Fe-basierten Vorbeschichtung plattiert und anschließend in einer speziellen Atmosphäre wärmebehandelt wird.

Eine der Erfindung zugrundeliegende Aufgabenstellung kann darin gesehen werden, ein Galvannealing-Verfahren anzugeben, welches es ermöglicht, dass die beim Verzinken aufgebrachte Zn-basierte Schicht vollständig durchlegiert, ohne die Dauer und/oder die Temperatur der Wärmebehandlung erhöhen zu müssen. Ferner soll das Verfahren den Galvannealing-Prozess (Verzinken und Wärmebehandlung) auch für Stahlbleche mit höheren Si-Gehalten wirtschaftlich durchführbar oder überhaupt möglich machen. Ferner soll ein kostengünstig herstellbares Si-legiertes Galvannealed-Stahlblech geschaffen werden.

Die Aufgabe wird durch die Merkmale der unabhängigen Ansprüche gelöst. Ausführungsbeispiele und Weiterbildungen der Erfindung sind Gegenstand der abhängigen Ansprüche.

Demnach umfasst ein Verfahren zur Herstellung eines Galvannealed-Stahlblechs das Bereitstellen eines insbesondere walzharten Stahlblechs, welches Si-legiert ist. Das Stahlblech wird zu Einstellung der mechanischen Eigenschaften und/oder zur Konditionierung der Oberfläche einem Rekristallisationsglühen unterzogen. Durch Verzinken des geglühten Stahlblechs wird eine zinkbasierte Schicht über dem Stahlblech hergestellt. Der

Galvannealing-Prozess umfasst ferner das Wärmebehandeln des verzinkten Stahlblechs. Dabei wird vor der Wärmebehandlung eine Reaktivsubstanz R über dem Stahlblech angeordnet, die mit Si, das während der Wärmebehandlung aus dem Stahlblech ausdiffundiert, eine intermetallische R-Si Phase in der zinkbasierten Schicht bildet. Die R-Si Phase verringert den Anteil von sich bei der Wärmebehandlung in der zinkbasierten Schicht bildenden Fe-Si und/oder Fe-Si-Al Phasen. Dies bewirkt, dass bei der Wärmebehandlung ein Legieren der Zinkschicht mit Eisen aus dem Stahlblech erleichtert wird.

Der Erfindung liegt unter anderem die Vermutung zugrunde, dass Si, welches bei der Wärmebehandlung in die zinkbasierte Schicht diffundiert, die Zn-Fe Reaktion verändert. Durch die Verringerung des Anteils der sich bei der Wärmebehandlung in der zinkbasierten Schicht bildenden Fe-Si Phase und/oder Fe-Al Phase wird erreicht, dass mehr Fe für die Durchlegierung der zinkbasierten Schicht in die Zn-Fe Phasen zur Verfügung steht.

Mit anderen Worten wird Si, welches die Zn-Fe Reaktion der zinkbasierten Schicht verlangsamt, durch die Ausbildung der intermetallischen R-Si Phase gebunden und somit "neutralisiert". Möglicherweise wird ferner durch die über dem Stahlblech angeordnete Reaktivsubstanz R die Bildung von Si-reichen Oxiden, welche als Diffusionsbarriere für Fe wirken, reduziert.

Dies bewirkt, dass aus dem Stahlblech während der Wärmebehandlung ausdiffundierendes Si die Zn-Fe Phasenbildung nicht mehr in dem Maße behindert, wie dies bei Nichtvorhandensein der Reaktivsubstanz R der Fall ist. Das erfindungsgemäße Verfahren gewährleistet stets eine ausreichend schnelle Zn-Fe Reaktion beim Galvannealing-Prozess. Insofern kann der Galvannealing-Prozess ohne Prozessanpassungen oder mit geringeren erforderlichen Anpassungen des Prozesses (z.B. bei vergleichsweise niedrigeren Glühtemperaturen und/oder vergleichsweise kürzeren Glühdauern) ausgeführt werden. Eine Legierungsanpassung des Grundwerkstoffs (Stahlblech) ist nicht erforderlich. Auch höher Si-legierte Stahlbleche können mittels Galvannealing (Verzinken und anschließende Wärmebehandlung) mit einer Korrosionsschutzschicht beschichtet werden. Die auf diese Weise hergestellten Galvannealed-Stahlbleche sind kostengünstig und einfach herstellbar.

Die Reaktivsubstanz R kann beispielsweise in einer Schicht enthalten sein, die vor dem Verzinken auf das Stahlblech aufgebracht wird. Diese Schicht befindet sich somit zwischen der Oberfläche des Stahlblechs und der beim Verzinken aufgebrachten zinkbasierten Schicht.

Beispielsweise wird die die Reaktivsubstanz R enthaltende Schicht vor dem Rekristallisationsglühen aufgebracht. Dies kann das Aufbringen dieser Schicht in der industriellen Fertigung erleichtern, da im Bandweg hinter dem Rekristallisationsglühen anlagentechnisch häufig nicht ausreichend Platz für eine Anlage zur Schichtaufbringung vorhanden ist. Allerdings muss die Reaktivsubstanz R in diesem Fall in der Lage sein, das Rekristallisationsglühen zu überstehen, d.h. beim Rekristallisationsglühen nicht oder nur in geringem Maße in das darunterliegende Stahlblech einzudiffundieren oder vom Stahlblech abzudampfen.

Alternativ oder zusätzlich kann die die Reaktivsubstanz R enthaltende Schicht nach dem Rekristallisationsglühen aufgebracht werden. In diesem Fall kann sich das Rekristallisationsglühen nicht schädlich auf die Schicht auswirken.

Die Schicht kann z.B. durch elektrolytisches Abscheiden, physikalische Dampfphasenabscheidung (PVD) oder durch Sprühen aufgebracht werden.

Die Schichtdicke der die Reaktivsubstanz R enthaltenden Schicht kann zwischen 1 nm und 100 nm, insbesondere 10 nm und 50 nm betragen, sofern die Schicht allein die Reaktivsubstanz R enthält. Andernfalls kann die Schichtdicke entsprechend größer sein, um eine gleiche Menge an Reaktivsubstanz R zu speichern. Stets kann eine Schichtdicke gewählt werden, die in Abhängigkeit von der verwendeten Reaktivsubstanz R so viel Reaktivsubstanz R zur Verfügung stellt, dass eine signifikante oder sogar vollständige Abbindung von Si (durch Bildung der R-Si Phase) ermöglicht wird.

Wird das Verzinken mittels Feuerverzinkens durchgeführt, besteht eine andere Möglichkeit, die Reaktivsubstanz R in der zinkbasierten Schicht verfügbar zu machen darin, diese der beim Feuerverzinken verwendeten zinkbasierten Schmelze (d.h., dem Zinkbad) zuzugeben. Auf diese Weise kann das Aufbringen der die Reaktivsubstanz R enthaltenden Schicht auf das Stahlblech entfallen. Beim elektrolytischen Verzinken kann die Reaktivsubstanz R gegebenenfalls dem Zinkelektrolyten zugegeben werden.

Die Reaktivsubstanz R kann eines oder mehrere der Elemente aus der Gruppe bestehend aus Mo, Cr, Nb, V, B und Zr sein. Insbesondere kann es sich bei der Reaktivsubstanz R um Mo oder um Cr oder um eine Kombination aus Cr und Mo oder um eine Kombination aus Nb und Cr handeln.

Die Menge der Reaktivsubstanz R kann abhängig von dem Si-Gehalt des Stahlblechs und/oder insbesondere abhängig von der Menge an Si, die bei der Wärmebehandlung aus dem Stahlblech herausdiffundiert, sein. Beispielsweise kann eine Menge an Reaktivsubstanz R zugegeben werden, die bewirkt, dass in einem Reaktionsvolumen der wärmebehandelten zinkbasierten Schicht, dessen Dicke 2 pm über dem Stahlblech beträgt, ein Anteil der Reaktivsubstanz R in wt% enthalten ist, der mindestens dem Anteil von Si in dem Reaktionsvolumen in wt% multipliziert mit dem Faktor 1, insbesondere 2 oder 3 entspricht.

Die Reaktivsubstanz R bindet Si durch intermetallische Phasenbildung (Phase R-Si) bei einem Faktor 1 zumindest teilweise und bei höheren Faktoren vollständig ab. Dadurch wird erreicht, dass die Reaktivsubstanz R der Verlangsamung der Zn-Fe Reaktion in der zinkbasierten Schicht aufgrund des eindiffundiertem Si mittels des beschriebenen Mechanismus (Neutralisierung von Si durch Bildung der R-Si Phase) effektiv entgegenwirkt.

Ist die Menge an Reaktivsubstanz R zu groß, könnte dies eventuell nachteilig sein, da es die Zinkbeschichtung möglicherweise beeinträchtigen kann (es würden intermetallische Zn-R Phasen gebildet, die zumindest nicht benötigt werden und gegebenenfalls auch nachteilig sind). Insofern kann es vorteilhaft sein, wenn der Gehalt an Reaktivsubstanz R in wt% maximal dem Anteil von Si in dem Reaktionsvolumen in wt% multipliziert mit dem Faktor 10, insbesondere 7, entspricht.

Die absoluten Gehalte an Reaktivsubstanz R können beispielsweise so gewählt werden, dass eine Menge von Reaktivsubstanz R zugegeben wird, die bewirkt, dass in einem Reaktionsvolumen der wärmebehandelten, zinkbasierten Zn-Fe Schicht, dessen Dicke 2 µm über dem Stahlblech beträgt, ein Anteil von 0,10 wt% - 6,0 wt%, insbesondere 0,5 wt% - 4,0 wt% der Reaktivsubstanz R enthalten ist.

Das beanspruchte Galvannealed-Stahlblech umfasst ein Stahlblech, welches Si-legiert ist, und eine über dem Stahlblech angeordnete zinkbasierte Schicht. Die zinkbasierte Schicht ist durch Verzinken und eine anschließende Wärmebehandlung (Galvannealing) erzeugt. In einem (gedachten) Reaktionsvolumen der zinkbasierten Schicht, dessen Dicke 2 pm über dem Stahlblech beträgt, ist eine Reaktivsubstanz R mit einem Anteil in wt% enthalten, der mindestens dem Anteil Si in dem Reaktionsvolumen in wt% multipliziert mit dem Faktor 1, insbesondere 2 oder 3 entspricht. Die Reaktivsubstanz R bildet eine intermetallische R-Si Phase in der zinkbasierten Schicht, welche energetisch bevorzugt gegenüber der Bildung von Fe-Si und/oder Fe-Si-Al Phasen in der zinkbasierten Schicht ist.

Die Reaktivsubstanz R kann eines oder mehrere der Elemente aus der Gruppe bestehend aus Mo, Cr, Nb, V, B und Zr umfassen. Insbesondere kann die Reaktivsubstanz R Mo oder Cr oder eine Kombination (z.B. Schichtenfolge) aus Cr und Mo oder eine Kombination (z.B. Schichtenfolge) aus Nb und Cr umfassen oder daraus bestehen.

Beispiele und Ausführungsmöglichkeiten der Erfindung werden nachfolgend unter Bezugnahme auf die Zeichnungen näher erläutert.
Figur 1 zeigt ein Stahlblech mit einer auf der Oberfläche des Stahlblechs aufgebrachten Schicht, die eine Reaktivsubstanz R enthält.
Figur 2 zeigt einen Ausschnitt aus einem Galvannealed-Stahlblech, in welchem ein (gedachtes) Reaktionsvolumen eingezeichnet ist.
Figur 3, linker Teil, zeigt das Reaktionsvolumen der Figur 2 während oder nach der Wärmebehandlung gemäß dem Stand der Technik, wobei das Eindiffundieren von Si in die zinkbasierte Schicht zur Bildung von Fe-Si und/oder Fe-Si-Al Ausscheidungen α-Fe2 führt. Im rechten Teil zeigt Figur 3 das Reaktionsvolumen der Figur 2 während oder nach der Wärmebehandlung gemäß der vorliegenden Offenbarung, wobei eine Substitution von α-Fe2 Ausscheidungen mit einer R-Si Phase der Reaktivsubstanz R, hier beispielsweise mit Mo5Si3, stattfindet.
Figur 4 zeigt ein Diagramm, in welchem die Molanteile der Ausscheidungen α-Fe2 und intermetallischen Phasen Mo5Si3 und Mo3Si in Abhängigkeit von dem Mo-Gehalt (in wt%) im Reaktionsvolumen im thermodynamischen Gleichgewicht angegeben sind.
Figur 5 zeigt in schematischer Darstellung ein Beispiel einer Prozessfolge für die Herstellung eines Galvannealed-Stahlblechs gemäß der vorliegenden Offenbarung.

In der Beschreibung verwendete Begriffe wie "über" oder "unter" in Bezug auf ein Teil, ein Element oder eine Materialschicht, das/die "über" oder "unter" einer Oberfläche geformt oder lokalisiert oder angeordnet ist, können hier verwendet werden, um zu bedeuten, dass das Teil, das Element oder die Materialschicht "direkt auf" oder "direkt unter", d.h. in direktem Kontakt mit der angesprochenen Oberfläche, lokalisiert (z.B. platziert, geformt, angeordnet, abgelagert usw.) ist. Der Begriff "über" oder "unter", der in Bezug auf ein Teil, ein Element oder eine Materialschicht verwendet wird, das/die "über" oder "unter" einer Oberfläche geformt oder lokalisiert ist, kann hier jedoch auch so verwendet werden, dass das Teil, das Element oder die Materialschicht "indirekt auf" oder "indirekt unter" der angesprochenen Oberfläche lokalisiert (z.B. platziert, geformt, angeordnet, abgelagert usw.) ist, wobei ein oder mehrere zusätzliche Teile, Elemente oder Schichten zwischen der angesprochenen Oberfläche und dem Teil, dem Element oder der Materialschicht angeordnet sind.

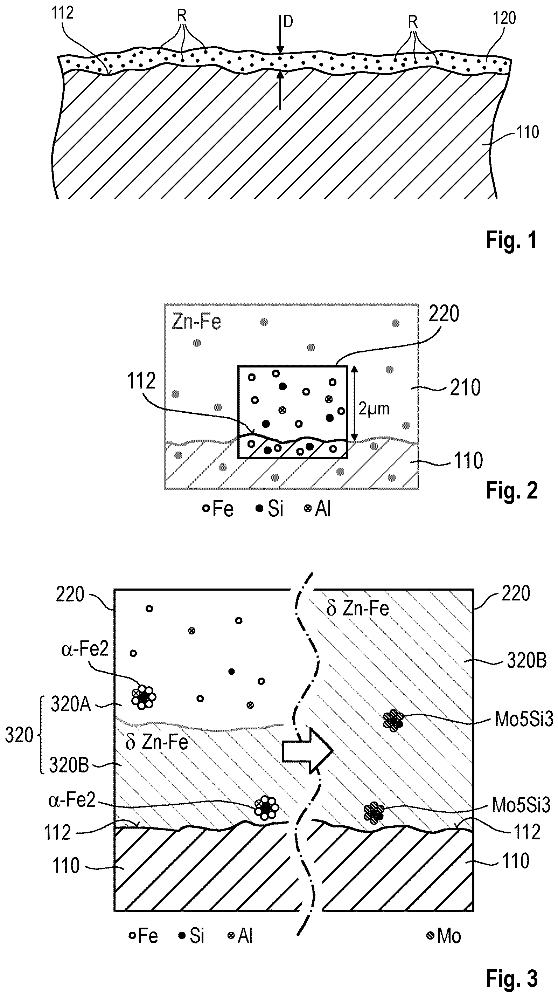

Figur 1 zeigt einen Ausschnitt aus einem Stahlblech 110. Das Stahlblech 110 ist mit einer Schicht 120 beschichtet, welche eine Reaktivsubstanz R enthält. D.h., das Stahlblech 110 weist eine Oberfläche 112 auf, auf welcher die Schicht 120 angeordnet ist. Eine oder mehrere Zwischenschichten (z.B. eine Haftschicht) können vorhanden sein, eine Auftragung direkt auf die Oberfläche 112 des Stahlblechs ist ebenfalls möglich.

Bei dem Stahlblech 110 kann es sich um ein bekanntes Stahlblech handeln, das z.B. im Fahrzeugbau oder in anderen Anwendungen für die Herstellung von höherfesten oder hochfesten Strukturteilen verwendet wird. Beispielsweise kann es sich um AHSS (Advanced High Strength Steel), insbesondere um UHSS (Ultra-High Strength Steel) handeln. AHSS sind beispielsweise Stähle mit einer mehrphasigen Mikrostruktur, die eine oder mehrere andere Phasen als Ferrit, Perlit oder Zementit enthält - z.B. Martensit, Bainit, Austenit und/oder Restaustenit in ausreichenden Mengen, um die gewünschten mechanischen Eigenschaften zu erzeugen.

Im Allgemeinen können von der Offenbarung sämtliche Stähle umfasst sein, die Si-legiert sind und zum Korrosionsschutz einen Galvannealing-Prozess (Verzinkung mit nachfolgender Wärmebehandlung) unterzogen werden sollen.

Die Schicht 120 kann allein aus der Reaktivsubstanz R bestehen. Es ist jedoch auch möglich, die Reaktivsubstanz R in ein anderes Material (z.B. Fe) einzubetten, das die Reaktivsubstanz R nicht bindet und bei der Wärmebehandlung des Galvannealing-Prozesses freigibt. Neben Fe können auch andere metallische Matrix-Materialien in der Schicht 120 enthalten sein.

Das heißt, die Schicht 120 muss keine reine R-Schicht sein, sondern kann ein Legierungsmatrix-Material enthalten, dass die Wirkung der Reaktivsubstanz R nicht oder nicht wesentlich beeinträchtigt.

Ohne Einschränkung der Allgemeinheit wird im Folgenden die Schicht 120 beispielhaft als reine R-Schicht beschrieben. Sofern die Schicht 120 ein metallisches Matrix-Material enthält, kann eine Dicke D der Schicht 120 entsprechend größer als im Folgenden angegeben eingestellt werden, um eine gleiche Menge an Reaktivsubstanz R zu speichern.

Die Reaktivsubstanz R kann eine oder mehrere unterschiedliche Substanzen enthalten. Beispielsweise kann die Reaktivsubstanz R allein aus Mo oder allein aus Cr bestehen. Es sind jedoch auch Kombinationen aus Mo und Cr oder Nb und Cr möglich. Ferner kann die Reaktivsubstanz R auch die Elemente V, B und/oder Zr enthalten.

Das in Figur 1 gezeigte Stahlblech 110 mit Schicht 120 kann entweder schon vor dem Rekristallisationsglühen oder erst nach dem Rekristallisationsglühen mit der Schicht 120 beschichtet sein. In vielen Fällen findet die Beschichtung vor dem Rekristallisationsglühen des Stahlblechs 110 statt. In diesem Fall muss die Reaktivsubstanz R so gewählt sein, dass die Schicht 120 die Reaktivsubstanz R auch nach dem Rekristallisationsglühen R enthält. Dies ist insbesondere für die Reaktivsubstanzen Mo, Cr und Nb der Fall.

Die Dicke D der Schicht 120 kann gering sein. Insbesondere bei einer allein aus der Reaktivsubstanz R bestehenden Schicht 120 können Schichtdicken zwischen 1 nm und 100 nm und beispielsweise zwischen 10 nm und 50 nm gewählt werden.

Auf das in Figur 1 gezeigte Stahlblech 110 mit der darüber angeordneten Schicht 120 wird anschließend eine zinkbasierte Schicht (in Figur 1 nicht gezeigt) aufgebracht.

Das Aufbringen der zinkbasierten Schicht erfolgt beispielsweise mittels Feuerverzinkens. Dabei wird ein metallischer Zink-Überzug auf dem Stahlblech 110 durch Eintauchen in geschmolzenes Zink oder eine Zinklegierung aufgebracht. Der Prozess wird auch als Schmelztauchverzinken bezeichnet. Die zinkbasierte Schicht kann beispielsweise aus reinem Zink oder einer zinkbasierten Legierung bestehen. Bekannt sind beispielsweise Zinklegierungen, die in geringer Menge (z.B. zwischen 0,1 wt% und 0,7 wt%) Aluminium enthalten.

Falls das Stahlblech 110 zuvor nicht mit der die Reaktivsubstanz R enthaltenden Schicht 120 beschichtet wurde, muss dem Zinkbad die Reaktivsubstanz R beigemischt werden.

Dabei kann jedoch das Problem auftreten, dass die Reaktivsubstanz R nicht oder nicht in den gewünschten Mengen in dem Zinkbad löslich ist. Daher ist in vielen Fällen, z.B. bei R = Mo, die Zugabe der Reaktivsubstanz R über die in Figur 1 dargestellte Schicht 120 bevorzugt.

Nach dem Feuerverzinken erfolgt die für den Galvannealing-Prozess charakteristische Wärmebehandlung, mit welcher die zinkbasierte Schicht mit dem Fe aus dem Stahlblech 110 möglichst vollständig in Zn-Fe Phasen umgewandelt werden soll. Für eine vollständige Phasenumwandlung (Durchlegierung) sind etwa 9 wt% Fe in der Zn-Fe-Schicht erforderlich.

Alternativ zur Feuerverzinkung kann die Zinkschicht auch mittels elektrolytischer Verzinkung (sogenanntes ELO-Verzinken) aufgebracht werden. Beispielsweise kann der Ablauf dann folgendermaßen ausgeführt werden: Durch ELO-Verzinken des geglühten Stahlblechs in einem Zink-Elektrolytbad, in dem ein Gleichstrom fließt, wird eine zinkbasierte Schicht über dem Stahlblech hergestellt. Der Galvannealing-Prozess umfasst dann noch das Wärmebehandeln des elektrolytisch verzinkten Stahlblechs. Dabei wird die Reaktivsubstanz R in der bereits beschriebenen Weise z.B. vor oder nach dem Rekristallisationsglühen über dem Stahlblech angeordnet. Wie bereits beschrieben bildet die Reaktivsubstanz dann mit Si, das während der Wärmebehandlung aus dem Stahlblech ausdiffundiert, eine intermetallische R-Si Phase in der zinkbasierten Schicht. Die R-Si Phase verringert den Anteil einer von sich bei der Wärmebehandlung in der zinkbasierten Schicht bildenden Fe-Si Phase und wirkt dadurch der Verlangsamung der Zn-Fe Reaktion entgegen.

Figur 2 zeigt einen Ausschnitt aus einem Galvannealed-Stahlblech, in welchem das Stahlblech 110, dessen Oberfläche 112 und die zinkbasierte Schicht nach der Wärmebehandlung, im Folgenden auch als Zn-Fe-Schicht 210 bezeichnet, dargestellt sind. Ferner veranschaulicht Figur 2 den Si-Anteil in einem (gedachten) Reaktionsvolumen 220 nach der Wärmebehandlung. Das Reaktionsvolumen 220 befindet sich in der Zn-Fe-Schicht 210 und grenzt an seiner Unterseite an die Oberfläche 112 des Stahlblechs 110 an. Die obere Grenze des Reaktionsvolumens kann beispielsweise 2 µm von der Oberfläche des Stahlblechs 110 beabstandet sein.

In dem Reaktionsvolumen 220 befinden sich neben Zn die Elemente Fe, Si und gegebenenfalls Al (insbesondere wenn eine Feuerverzinkung durchgeführt wurde). Es ist auch möglich, dass kein Al im Reaktionsvolumen 220 vorhanden ist, insbesondere, wenn eine elektrolytische Verzinkung vorgenommen wurde.

Im Folgenden wird der Si-Anteil betrachtet, der sich in diesem oberflächenangrenzenden Reaktionsvolumen 220 in der Zn-Fe-Schicht 210 löst. Auch außerhalb des Reaktionsvolumens 220 kann noch Si vorhanden sein. Das hier betrachtete Reaktionsvolumen 220 dient dazu, chemische Prozesse und Mengenangaben in einem oberflächennahen Bereich der Zn-Fe Schicht 210 zu beschreiben.

Gemäß der vorliegenden Offenbarung wird die Reaktivsubstanz R in das Reaktionsvolumen 220 eingebracht. Grundsätzlich kann dies durch jeden dankbaren Prozess erfolgen. Die Reaktivsubstanz R bindet dann Si durch intermetallische Phasenbildung (Phase R-Si) zumindest teilweise ab, wodurch die Verlangsamung der Zn-Fe Reaktion (Durchlegierung der zinkbasierten Schicht mit Fe) abgeschwächt oder vermieden wird.

Figur 3, linker Teil, veranschaulicht den Reaktionsmechanismus im Reaktionsvolumen 220 während oder nach der Wärmebehandlung ohne die Zugabe der Reaktivsubstanz R, d.h. bei einem Vorgehen wie im Stand der Technik. Si wird in der zinkbasierten Schicht 320 gelöst und verschiebt das thermodynamische Gleichgewicht in Richtung einer Bildung von Fe-Si und/oder Fe-Si-Al Ausscheidungen α-Fe2. Dadurch wird mehr Zeit und/oder eine höhere Temperatur benötigt, um die nicht durchreagierte zinkbasierte Schicht 320A in die Zn-Fe Phasen (hier ist die bevorzugte Zn-Fe Phase δ Zn-Fe angegeben) 320B zu reagieren. Daher sind in Figur 3, linker Teil, die Zn-Fe Phasen 320B in der Nähe der Oberfläche des Stahlblechs 110 bereits gebildet, während weiter entfernt von der Oberfläche des Stahlblechs 110 noch die nicht durchreagierte zinkbasierte Schicht 320A vorhanden ist.

Es hat sich gezeigt, dass die Bildung der Fe-Si und/oder Fe-Si-Al Ausscheidungen α-Fe2 einen deutlichen Einfluss auf den Fe-Gehalt in den Zn-Fe Phasen 320B hat. Ein Volumenanteil von 4 vol% der Ausscheidungen α-Fe2 in dem Reaktionsvolumen 220 bewirkt eine Verringerung des Fe-Gehalts in den Zn-Fe Phasen 320B (insbesondere in der bevorzugten δ Zn-Fe Phase) um etwa 3 wt%. D.h., eine vollständige Durchlegierung der zinkbasierten Schicht 320 in die Zn-Fe Phasen 320B (insbesondere in die bevorzugte δ Zn-Fe Phase) lässt sich bei einem hohen Anteil an Ausscheidungen α-Fe2 in dem Reaktionsvolumen 220 nur durch deutlich längerer Glühdauern erreichen.

α-Fe2 ist eine Fe-Phase mit höherer Löslichkeit an Si und Al, welche in den kristallografischen Konfigurationen B2 und/oder D03 auftritt. Diese Phase, die sich in Form von Ausscheidungen in der zinkbasierten Schicht 320 bildet, unterscheidet sich damit wesentlich von Fe im Stahlblech 110.

Figur 3, rechter Teil, veranschaulicht die Substitution der Fe-Si und/oder Fe-Si-Al Ausscheidungen α-Fe2 mit Mo5Si3. Mo5Si3 ist die intermetallische Mo-Si Phase, welche bei Verwendung von Mo als Reaktivsubstanz R entsteht. Durch die Bildung der Mo5Si3 Phase wird Fe wieder für die Reaktion mit Zn frei.

In Figur 3, rechter Teil, wird der Reaktionsmechanismus (Substitution von α-Fe2 mit einer intermetallischen R-Si Phase) anhand des Beispiels R = Mo beschrieben. Die zinkbasierte Schicht 320 ist "durchreagiert", d.h. sie wird durch Zn-Fe Phasen 320B - und vorzugsweise durch die gewünschte δ Zn-Fe Phase - gebildet.

Es wird darauf hingewiesen, dass die Durchreaktion die gesamte zinkbasierte Schicht 320 betreffen kann. D.h., vorzugsweise wird die gesamte zinkbasierte Schicht 320 zur durchreagierten Zn-Fe Schicht 210 (die in den Zn-Fe Phasen 320B, vorzugsweise in der gewünschte gewünschte δ Zn-Fe Phase vorliegt). Die für das oberflächennahe Reaktionsvolumen 220 beschriebenen Merkmale können somit für die gesamte zinkbasierte Schicht 320 nach der Wärmebehandlung gelten.

Ferner können die für dieses Beispiel beschriebenen Prozesse und/oder Merkmale analog auf andere Reaktivsubstanzen R übertragen werden, sofern im Folgenden nichts Gegenteiliges beschrieben ist. Das heißt, die anhand des Beispiels Mo beschriebenen Sachverhalte lassen sich (sofern nichts anderes beschrieben ist) auf die im Folgenden genannten Elemente für die Reaktivsubstanz R verallgemeinern.

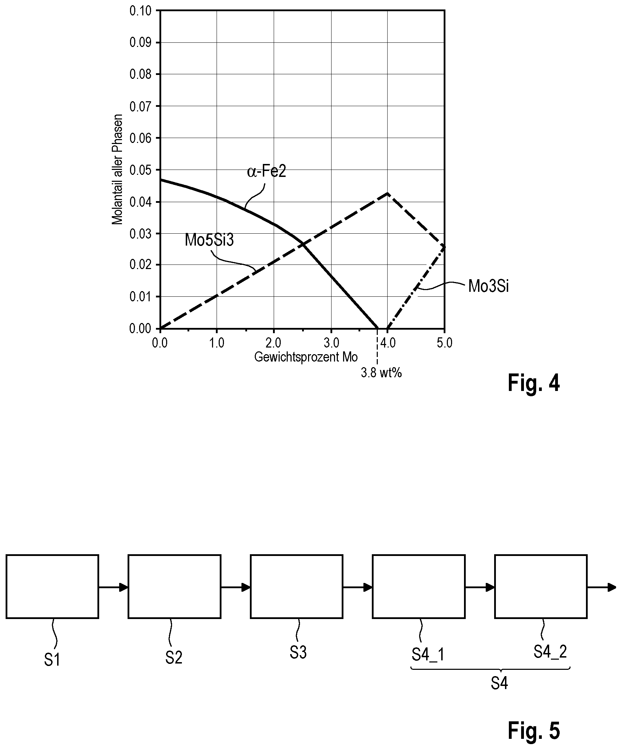

Figur 4 zeigt die berechneten Ausscheidungs- und Phasenanteile des Reaktionsvolumens 220 im thermodynamischen Gleichgewicht. Die Dicke des der Berechnung zugrunde gelegten Reaktionsvolumens 220 betrug 2 µm. Als Reaktivsubstanz R wurde wie bereits erwähnt R = Mo gewählt.

Der Berechnung lag ein Stahlblech 110 mit einem Si-Gehalt von 1,5 wt% zugrunde. Mo wurde direkt auf der Oberfläche des Stahlblechs 110 in einer Schicht der Dicke D = 20 nm abgeschieden. Die Schichtauftragung kann beispielsweise elektrolytisch als Mo-Flash, durch PVD oder durch Sprühen erfolgen. Die Verzinkung erfolgte durch Feuerverzinken.

Figur 4 zeigt, dass 3, 8 wt% Mo im Reaktionsvolumen 220 für eine vollständige Substitution der α-Fe2 Ausscheidungen durch die Mo5Si3 Phase benötigt wird. Dabei betrug der Si-Gehalt im Reaktionsvolumen 220 den Wert 0,7 wt%.

Ab einem Mo-Gehalt von 4, 0 wt% bildet sich mit Mo3Si eine weitere Mo-Si-Phase, die für die Substitution der α-Fe2 Ausscheidungen nicht nachteilig ist. Mo5Si3 stellt jedoch die bevorzugte Phase dar, da diese auch für geringere Mengen Mo im Reaktionsvolumen α-Fe2 substituiert.

Insofern reicht es aus, dem Reaktionsvolumen 220 eine Menge an Mo von 3,8 wt% zuzugeben, um die Bildung der α-Fe2 Ausscheidungen vollständig zu unterdrücken. Wie das Diagramm veranschaulicht, ist eine Verbesserung (Beschleunigung) der Durchlegierung der zinkbasierten Schicht mit dem Fe aus dem Stahlblech 110 jedoch schon bei deutlich geringeren Gehalten an Mo zu erwarten. Beispielsweise wird bei einem Mo-Gehalt von etwa 2,5 wt% der Anteil der α-Fe2 Ausscheidungen im Reaktionsvolumen 220 bereits halbiert.

In Tabelle 1 sind Angaben zu verschiedenen Reaktivsubstanzen R zusammengefasst (erste Spalte). Berechnungen wurden für die Reaktivsubstanzen R = Mo, Cr, Cr+Mo, Ti, Nb+Cr, V, Nb, Ru, B, C und Zr durchgeführt.

**Tabelle 1**

| **Beispiele für R** | **System im Reaktionsvolumen (feuerverzinkt)** | **Bevorzugte R-Phase** | **Anteil R-Phase pro mol** | **Si-Anteil in R-Phase [mol]** |
|---|---|---|---|---|
| **Mo** | **Zn-Fe-Al-Si-Mo** | **Mo5Si3** | **0.04** | **0.375** |
| **Cr** | **Zn-Fe-Al-Si-Cr** | **Cr3Si** | **0.064** | **0.246** |
| **Cr + Mo** | **Zn-Fe-AI-Si-Mo-Cr** | **(Mo, Cr)3Si** | **0.012** | **0.250** |
| Ti | Zn-Fe-AI-Si-Ti | Fe2SiTi | 0.037 | 0.250 |
| **Nb + Cr** | **Zn-Fe-AI-Si-Nb-Cr** | **(Nb, Cr)11Si8** | **0.032** | **0.421** |
| V | Zn-Fe-AI-Si-V | α-Fe2 | 0.062 | 0.233 |
| Nb | Zn-Fe-Al-Si-Nb | FeNbSi | 0.030 | 0.333 |
| Ru | Zn-Fe-Al-Si-Ru | RuSi | 0.023 | 0.500 |
| B | Zn-Fe-Al-Si-B | Fe5Si2B, Fe5SiB | ~ 0.052 | ~ 0.200 |
| C | Zn-Fe-Al-Si-C | SiC | 0.012 | 0.500 |
| Zr | Zn-Fe-Al-Si-Zr | Fe4Si2Zr | 0.036 | 0.286 |

**Tabelle 1 (Fortsetzung)**

| **Beispiele für R** | **Benötigte Menge R für vollständige Substitution** | | **Anmerkung** |
|---|---|---|---|
| | **R-Anteil im Reaktionsvolumen** | **Schichtdicke(n) D** | |
| **Mo** | 3,8 wt% Mo | 30 nm | |
| **Cr** | 3,7 wt% Cr | 44 nm | |
| **Cr + Mo** | 2,4 wt% Mo, 3,7 wt% Cr | 11 nm Mo + 33 nm Cr | |
| **Ti** | | | A1 |
| **Nb + Cr** | 2,3 wt% Nb, 3,7 wt% Cr | 13 nm Nb + 12 nm Cr | |
| V | | | A2 |
| Nb | | | |
| Ru | | | A3 |
| B | | | |
| C | | | A4 |
| Zr | | | A1 |
| | | | |

In der zweiten Spalte der Tabelle 1 ist das der Berechnung in dem Reaktionsvolumen 220 zu Grunde gelegte System angegeben. Das System enthält stets Zn aus der zinkbasierten Schicht und Fe sowie Si aus dem Stahlblech 110. Daneben enthält es das oder die Legierungselemente der Reaktivsubstanz R und optional Al (bei einem elektrolytischen Verzinken würde Al z.B. nicht vorhanden sein).

Die Spalte "Bevorzugte R-Phase" gibt die R-Si Phase(n) an, die die als Ausscheidung vorliegende α-Fe2 Phase substituiert.

Die entsprechenden Phasenanteile und Si-Anteile in dieser Phase, bezogen auf 1 Mol des Reaktionsvolumens 220, sind in den Spalten "Anteil R-Phase pro mol" und "Si-Anteil in R-Phase [mol]" angegeben.

Die für die praktische Anwendung und Wirksamkeit bevorzugten Reaktivsubstanzen R sind Mo oder Cr oder Cr+Mo oder Nb+Cr. Cr hat den Nachteil, dass es aufgrund seiner Oxidationsneigung unter Umgebungsatmosphäre problematisch ist. Mit R = Nb+Cr lässt sich diese Schwierigkeit verringern bzw. beheben, indem Cr teilweise durch Nb ersetzt wird. Allerdings scheint Nb nur in Kombination mit Cr eine wirksame Verbesserung zu bewirken, da Nb als einzelnes Legierungselement (R = Nb) nur eine geringe Wirkung hat (siehe Tabelle 1, der Si-Anteil in dieser Phase ist geringer (d.h., es wird weniger Si "neutralisiert") und generell ist weniger dieser Phase stabil (Anteil R-Phase pro mol)).

Die restlichen Reaktivsubstanzen R = Ti, V, Ru, B, C und Zr sowie die nicht in der Tabelle aufgeführten Reaktivsubstanzen Al, Co und N haben zwar auch eine Wirkung, jedoch ist diese deutlich geringer als bei den genannten Reaktivsubstanzen und/oder diese Reaktivsubstanzen R sind aus anderen Gründen nicht praktikabel.

Zur Spalte "Anmerkungen" in der Tabelle 1:
Anmerkung A1: Für R = Ti tritt das Problem auf, dass Ti auch viel Fe bindet und somit die Zn-Fe Reaktion behindert. Ein ähnliches Problem tritt bei R = Zr auf.

Anmerkung A2: V substituiert teilweise Fe, so dass sich anstelle der Zn-Fe Phasen teilweise Zn-V Phasen bilden. Deswegen erscheint V als Reaktivsubstanz weniger geeignet. Eine ähnliche Wirkung zeigen R = Cr oder Co oder Al.

Anmerkung A3: Ru bildet eine intermetallische Phase mit 50 at% Si, 43 at% Ru und 7 at% Fe. Ru ist teuer und aufgrund der großen benötigten Menge nicht praktikabel.

Anmerkung A4: C als Reaktivsubstanz kann das Si zwar binden, ist jedoch aus anderen Gründen nicht praktikabel.

Für die bevorzugten Reaktivsubstanzen R = Mo, Cr, Cr+Mo und Nb+Cr wurden die benötigten Mengen für eine vollständige Substitution der Fe-Si und/oder Fe-Si-Al Ausscheidungen α-Fe2 berechnet. Ferner wurden die zugehörigen Schichtdicken D berechnet, wobei sich diese Schichtdicken D auf die reine(n) Reaktivsubstanz(en) R (ohne den Einbau derselben in eine Metallmatrix, z.B. Fe-Matrix) beziehen.

Wie bereits erwähnt, sind die in Tabelle 1 angegebenen Mengen R, die für eine vollständige Substitution der Fe-Si und Fe-Si-Al Ausscheidungen α-Fe2 berechnet wurden, nicht erforderlich, auch geringere Mengen können bereits eine wirksame Verbesserung der Zn-Fe-Reaktion bewirken. Tabelle 2 gibt für diese Reaktivsubstanzen R Bereichsgrenzen der jeweiligen Anteile (in wt%) im Reaktionsvolumen 220 an (die Dicke des betrachteten Reaktionsvolumens 220 betrug 2 pm). Entsprechend können geringere Schichtdicken D der Schicht 120 (bzw. des Mehrschichtsystems 120 für R = Cr+Mo oder R = Nb+Cr) gewählt werden.

**Tabelle 2**

| **Beispiele für R** | **Bevorzugte Bereich für die Menge R und/oder die Schichtdicke(n) D** | |
|---|---|---|
| | **R-Anteil im Reaktionsvolumen** | **Schichtdicke(n) D** |
| **Mo** | 0,1 - 6,0 wt%, insb. 0,5 - 4,0 wt% | 1 - 100 nm, insb. 10 - 50 nm |
| **Cr** | 0,1 - 6,0 wt%, insb. 0,5 - 4,0 wt% | 1 - 100 nm, insb. 10 - 50 nm |
| **Cr + Mo** | 0,1 - 3,5 wt% Mo, 0,5 - 5,0 wt% Cr | D(Mo) < D(Cr) |
| **Nb + Cr** | 0,1 - 3,5 wt% Nb, 0,5 - 5,0 wt% Cr | D(Nb) = D(Cr)±30% |

Figur 5 erläutert Prozessschritte für die Durchführung eines beispielhaften Verfahrens zur Herstellung eines Galvannealed-Stahlblechs.

Bei S1 wird ein Stahlblech 110, das Si-legiert ist, bereitgestellt. Dieser Prozess kann die Herstellung dieses Stahlblechs 110 umfassen. Ausgangspunkt der Stahlerzeugung ist ein Hochofenprozess, in welchem eine Stahlschmelze erschmolzen wird. Die Stahlschmelze weist eine Zusammensetzung auf, in welcher Si als Legierungselement, z.B. in einem Gehalt von gleich oder mehr als 0,4 wt%, 0,8 wt%, 1,0 wt%, 1, 2 wt%, 1,4 wt% oder 1,6 wt% vorhanden ist.

Das beim Vergießen der Stahlschmelze (beispielsweise Strangguss) hergestellte Vorprodukt kann anschließend in einer Walzstation warmgewalzt werden. Dadurch wird ein Warmband erzeugt.

Nach dem Warmwalzen kann das Warmband zu einem Coil (Bund) gehaspelt werden.

Das Warmband kann einem Beizvorgang zum Entfernen der Zunderschicht zugeführt werden.

Das zu einem Coil gewickelte Warmband kann dann geglüht werden. Das Glühen des Warmbands wird z.B. am gewickelten Coil durch eine Haubenglühung durchgeführt.

Anschließend kann das Warmband in einer Walzstation kaltgewalzt werden. Bei diesem optionalen Prozessschritt wird in S1 ein kaltgewalztes Stahlblech (Stahlband) bereitgestellt.

Im Prozessweg hinter dem Bereitstellen des Stahlblechs bei S1 erfolgt bei S3 ein Rekristallisationsglühen des Stahlblechs. Das Rekristallisationsglühen des Stahlblechs wird auch als Schlussglühen bezeichnet. Es kann eine Glühtemperatur zwischen 650°C - 920°C eingestellt werden. Die Glühdauer des Rekristallisationsglühens kann z.B. zwischen 30 und 1500 Sekunden betragen. Das Rekristallisationsglühen kann z.B. in einem Durchlaufglühofen erfolgen.

Vor oder nach dem Rekristallisationsglühen bei S3 kann bei S2 eine die Reaktivsubstanz R enthaltende Schicht auf das Stahlblech 110 aufgebracht werden. Die die Reaktivsubstanz R enthaltende Schicht kann einseitig oder beidseitig über gegenüberliegende Oberflächen des Stahlblechs 110 (Stahlband) aufgebracht werden. Wird die Schicht 120, wie in Figur 5 beispielhaft dargestellt, vor dem Rekristallisationsglühen (S3) aufgebracht, ist es erforderlich, dass die Reaktivsubstanz R beim nachfolgenden Rekristallisationsglühen (bei S3) verfügbar bleibt. Alternativ oder zusätzlich zu S2 kann die Reaktivsubstanz R der zinkbasierten Schmelze beim Feuerverzinken oder dem Zink-Elektrolyten beim elektrolytischen Verzinken zugegeben werden.

Bei S4_1 wird durch Feuerverzinken oder elektrolytisches Verzinken eine zinkbasierte Schicht über dem Stahlblech hergestellt. Daran schließt sich eine Wärmebehandlung des verzinkten Stahlblechs bei S4_2 an. Die Prozesse S4_1 und S4_2 sind unter dem Begriff Galvannealing (bei S4) bekannt.

Nach dem Galvannealing-Prozess (bei S4) liegt ein Galvannealed-Stahlblech vor. Dabei wurde durch die Zugabe der Reaktivsubstanz R in das Reaktionsvolumen erreicht, dass die Wärmebehandlung des verzinkten Stahlblechs bei S4_2 in üblicher Weise, d.h. bei üblichen Temperaturen und üblichen Durchlaufzeiten vorgenommen werden kann und trotzdem eine ausreichende und gegebenenfalls vollständige Zn-Fe Reaktion der zinkbasierten Schicht 320A erreicht wird.

Beispielhafte Stahlbleche 110 können z.B. die folgende Zusammensetzung wt% aufweisen: C: 0,01 - 0,35%, Mn: 1 - 4%, Si: 0,4 - 2,5%, Nb: bis zu 0,2%, Ti: bis zu 0,2%, P: bis zu 0,1%, Al: bis zu 2, 0%, S: bis zu 0,01%, N: bis zu 0,1%, sowie optional eines oder mehrere Elemente aus der Gruppe Seltenerdmetalle, Mo, Cr, Zr, V, W, Co, Ni, B, Cu, Ca, mit Seltenerdmetalle: bis zu 0,2%, Mo: bis zu 1%, Cr: bis zu 3%, Zr: bis zu 1%, V: bis zu 1%, W: bis zu 1%, Co: bis zu 1%, Ni: bis zu 2ö, B: bis zu 0,1%, Cu: bis zu 3%, Ca: bis zu 0, 015%, und der Rest der Zusammensetzung Eisen und unvermeidliche Verunreinigungen.

Im Ergebnis wird ermöglicht, dass Si-legierte Stähle durch ein einfaches und kostengünstiges Verfahren mit dem Galvannealing Prozess korrosionsgeschützt werden können.

## Patentansprüche

1. Verfahren zur Herstellung eines Galvannealed-Stahlblechs, umfassend:
Bereitstellen eines Stahlblechs, welches Si-legiert ist;
Rekristallisationsglühen des Stahlblechs;
Verzinken des geglühten Stahlblechs, wodurch eine zinkbasierte Schicht über dem Stahlblech hergestellt wird; und
Wärmebehandeln des verzinkten Stahlblechs, wobei
vor der Wärmebehandlung eine Reaktivsubstanz, R, über dem Stahlblech angeordnet wird, die mit Si, das während der Wärmebehandlung aus dem Stahlblech ausdiffundiert, eine intermetallische R-Si Phase in der zinkbasierten Schicht bildet, welche den Anteil einer sich bei der Wärmebehandlung in der zinkbasierten Schicht bildenden Fe-Si und/oder Fe-Si-Al Phase verringert.

2. Verfahren nach Anspruch 1, wobei eine die Reaktivsubstanz, R, enthaltende Schicht vor dem Verzinken auf das Stahlblech aufgebracht wird.

3. Verfahren nach Anspruch 2, wobei die Schicht vor dem Rekristallisationsglühen aufgebracht wird.

4. Verfahren nach einem der Ansprüche 2 und 3, wobei die Schicht durch elektrolytisches Abscheiden, physikalische Dampfphasenabscheidung, PVD, oder Sprühen aufgebracht wird.

5. Verfahren nach einem der Ansprüche 2 bis 4, wobei die Schichtdicke der die Reaktivsubstanz, R, enthaltenden Schicht zwischen 1 nm und 100 nm, insbesondere zwischen 10 nm und 50 nm beträgt, sofern sie allein die Reaktivsubstanz, R, enthält, und andernfalls entsprechend größer ist, um eine gleiche Menge an Reaktivsubstanz, R, zu speichern.

6. Verfahren nach einem der vorhergehenden Ansprüche, wobei das Verzinken durch Feuerverzinken oder elektrolytisches Verzinken durchgeführt wird.

7. Verfahren nach Anspruch 6, wobei die Reaktivsubstanz, R, einer bei einem Feuerverzinken verwendeten zinkbasierten Schmelze zugegeben wird oder einem beim elektrolytischen Verzinken verwendeten Zinkelektrolyten zugegeben wird.

8. Verfahren nach einem der vorhergehenden Ansprüche, wobei die Reaktivsubstanz, R, eines oder mehrere der Elemente aus der Gruppe bestehend aus Mo, Cr, Nb, V, B und Zr ist, und insbesondere aus Mo oder Cr oder einer Kombination aus Cr und Mo oder einer Kombination aus Nb und Cr besteht.

9. Verfahren nach einem der vorhergehenden Ansprüche, wobei eine Menge an Reaktivsubstanz, R, zugegeben wird, die bewirkt, dass in einem Reaktionsvolumen der wärmebehandelten zinkbasierten Schicht, dessen Dicke 2 pm über dem Stahlblech beträgt, ein Anteil der Reaktivsubstanz, R, in wt% enthalten ist, der mindestens dem Anteil von Si in dem Reaktionsvolumen in wt% multipliziert mit dem Faktor 1, insbesondere 2 oder 3 entspricht.

10. Verfahren nach Anspruch 9, wobei der im Reaktionsvolumen enthaltene Anteil der Reaktivsubstanz, R, in wt% maximal dem Anteil von Si in dem Reaktionsvolumen in wt% multipliziert mit dem Faktor 10, insbesondere 7 entspricht.

11. Verfahren nach einem der vorhergehenden Ansprüche, wobei eine Menge an Reaktivsubstanz, R, zugegeben wird, die bewirkt, dass in einem Reaktionsvolumen der wärmebehandelten zinkbasierten Schicht, dessen Dicke 2 pm über dem Stahlblech beträgt, ein Anteil von 0,1 wt% bis 6,0 wt%, insbesondere 0,5 wt% bis 4,0 wt% der Reaktivsubstanz, R, enthalten ist.

12. Verfahren nach einem der vorhergehenden Ansprüche, wobei das Stahlblech folgende Zusammensetzung in wt% aufweist:
C: 0,01 - 0,35%,
Mn: 1 - 4%,
Si: 0,4 - 2,5%,
Nb: bis zu 0,2%,
Ti: bis zu 0,2%,
P: bis zu 0,1%,
Al: bis zu 2,0%,
S: bis zu 0,01%,
N: bis zu 0,1%,
sowie optional eines oder mehrere Elemente aus der Gruppe Seltenerdmetalle, Mo, Cr, Zr, V, W, Co, Ni, B, Cu, Ca, mit Seltenerdmetalle: bis zu 0,2%,
Mo: bis zu 1%,
Cr: bis zu 3%,
Zr: bis zu 1%,
V: bis zu 1%,
W: bis zu 1%,
Co: bis zu 1%,
Ni: bis zu 2ö,
B: bis zu 0,1%,
Cu: bis zu 3%,
Ca: bis zu 0,015%, und
der Rest der Zusammensetzung Eisen und unvermeidliche Verunreinigungen sind.

13. Galvannealed-Stahlblech, das ein Stahlblech, welches Si-legiert ist, und eine über dem Stahlblech angeordnete zinkbasierten Schicht umfasst, welche durch Verzinken und eine anschließende Wärmebehandlung erzeugt ist, wobei in einem Reaktionsvolumen der zinkbasierten Schicht, dessen Dicke 2 µm über dem Stahlblech beträgt, eine Reaktivsubstanz, R, mit einem Anteil in wt% enthalten ist, der mindestens dem Anteil von Si in dem Reaktionsvolumen in wt% multipliziert mit dem Faktor 1, insbesondere 2 oder 3 entspricht, wobei die Reaktivsubstanz, R, eine intermetallische R-Si Phase in der zinkbasierten Schicht bildet, die energetisch bevorzugt gegenüber der Bildung von Fe-Si und/oder Fe-Si-Al Phasen in der zinkbasierten Schicht ist.

14. Galvannealed-Stahlblech nach Anspruch 13, wobei die Reaktivsubstanz, R, eines oder mehrere der Elemente aus der Gruppe bestehend aus Mo, Cr, Nb, V, B und Zr umfasst, insbesondere aus Mo oder Cr oder einer Kombination aus Cr und Mo oder einer Kombination aus Nb und Cr besteht.

15. Galvannealed-Stahlblech nach Anspruch 13 oder 14, wobei eine Menge an Reaktivsubstanz, R, in einem Reaktionsvolumen der wärmebehandelten zinkbasierten Schicht, dessen Dicke 2 µm über dem Stahlblech beträgt, ein Anteil der Reaktivsubstanz, R, in wt% enthalten ist, der mindestens dem Anteil von Si in dem Reaktionsvolumen in wt% multipliziert mit dem Faktor 1, insbesondere 2 oder 3 entspricht.
